## Europäisches Patentamt
## European Patent Office
## Office européen des brevets

(11) Veröffentlichungsnummer: **0 239 732**
**A1**

(12) **EUROPÄISCHE PATENTANMELDUNG**

(21) Anmeldenummer: **87101010.4**

(22) Anmeldetag: **24.01.87**

(51) Int. Cl.4: **C08K 3/36 , C08L 21/00 , C08J 3/20 , C09C 1/30**

(30) Priorität: **01.03.86 DE 3606742**

(43) Veröffentlichungstag der Anmeldung:
**07.10.87 Patentblatt 87/41**

(84) Benannte Vertragsstaaten:
**BE DE ES FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Kleinert, Walter, Dr.**
**Geeste 81**
**D-4282 Velen(DE)**
Erfinder: **Müller, Michael, Dr.**
**Mecklenbecker Strasse 177**
**D-4400 Münster(DE)**
Erfinder: **Meyer, Klaus-Rudolf, Dr.**
**Auf der Uerfte 3**
**D-4320 Hattingen-Blankenstein(DE)**
Erfinder: **Huhn, Günter, Dr.**
**Leverkusener Strasse 13**
**D-4370 Marl(DE)**
Erfinder: **Simon, Jürgen**
**Im Spanenkamp 9**
**D-4370 Marl(DE)**

(54) **Verfahren zur Herstellung eines rieselfähigen, kieselsäuregefüllten Pulverkautschuks.**

(57) Die Erfindung betrifft ein Verfahren zur Herstellung eines rieselfähigen, kieselsäuregefüllten Pulverkautschuks nach an sich bekannten Methoden, wobei eine Kieselsäure eingesetzt wird, die nachstehende Eigenschaften aufweist:

1. $SiO_2$-Gehalt: 82 bis 91,5 Gew.-%
2. Metalloxide 0,5 bis 3 Gew.-%
3. Glühverlust (DIN 55 921/2 - gemessen bei 1 000 °C): 5 bis 15 Gew.-%
4. Feuchte (DIN 53 198 - gemessen bei 105 °C): 2 bis 10 Gew.-%
5. Oberfläche der Primärteilchen nach BET: 40 bis 250 m²/g
6. DBP-Absorption (ASTM D 2414-79) bezogen auf das eingewogene Gewicht: 170 bis 290%
7. Lineares Mittel der Anzahlverteilung der Sekundärteilchen: 10 bis 2 000 nm
8. Lineares Mittel der Volumenverteilung der Sekundärteilchen: 3 bis 30 μm
9. Anteil an Sekundärteilchen mit einem Durchmesser von < 1 μm; 0,01 bis 5 Gew.-%

-wobei die Zahlen der Parameter 1 bis 3 zusammengerechnet 100 Gew.-% ergeben müssen.

## Verfahren zur Herstellung eines rieselfähigen, kieselsäuregefüllten Pulverkautschuks

Gegenstand der Erfindung ist ein Verfahren zur Herstellung eines rieselfähigen, kieselsäuregefüllten Pulverkautschuks durch Ausfällen eines Kautschuklatex in Gegenwart von Kieselsäure und einem Fällungshilfsmittel mit Hilfe von Säuren sowie nach diesem Verfahren erhaltener Pulverkautschuk.

Die Herstellung von rieselfähigen, kieselsäuregefüllten Pulverkautschuk-Typen ist schon seit längerer Zeit bekannt. Zahlreiche Druckschriften befassen sich mit verschiedenen Varianten des Verfahrens. Wesentliches Merkmal aller Maßnahmen ist eine Copräzipitation von Kieselsäure (ausgehend von Wasserglas) und Kautschuk (aus Latex). Genereller Nachteil dieser Verfahren ist der Anfall großer Flüssigkeitsmengen, die in der Regel starke Anteile von Elektrolyten enthalten. Hierdurch ergeben sich gravierende Abwasserprobleme.

Ein solches Verfahren wird z. B. in DE-PS 20 30 172 beschrieben. Neben den allgemeinen, schon genannten Nachteilen des Verfahrens wird kein rieselfähiger Pulverkautschuk erhalten, der unmittelbar weiterverarbeitet werden kann. Selbst wenn ein rieselfähiges Pulver erhalten wird, ist das Pulverkorn zu groß. Es bedarf daher in jedem Fall eines zusätzlichen Mahlschritts. Andererseits wird in der Patentschrift ausdrücklich durch Versuche festgestellt, daß eine gesonderte Fällung der Kieselsäure, d. h. Verzicht auf eine Copräzipitation, und erst dann ein Vermengen dieser mit dem Kautschuk nicht zu erwünschten Ergebnissen führt.

Es ist bereits auch ein Verfahren bekannt geworden, Kautschuklatices in Gegenwart von Kieselsäure auszufällen (DE-PS 12 24 481). Hierbei handelt es sich aber nicht um ein Verfahren zur Herstellung von rieselfähigem Pulverkautschuk. Es werden die zum Anmeldezeitpunkt dieser Patentschrift üblichen Kautschukkrümel erhalten. Die dort angeführte Kieselsäure wird nicht näher definiert. Lediglich in den Beispielen wird die Größe der Oberfläche der Primärteilchen genannt. Zur Oberflächengröße und zum Aufbau der Sekundärteilchen wird nichts gesagt.

Aufgabe der Erfindung war es, ein Verfahren zur Herstellung von rieselfähigen, kieselsäuregefülltem Pulverkautschuk zu entwickeln, das die zum Stand der Technik geschilderten Nachteile vermeidet.

Diese Aufgabe wurde dadurch gelöst, daß in dem Verfahren eine Kieselsäure eingesetzt wird, die nachstehende Eigenschaften aufweist:

1. $SiO_2$-Gehalt: 82 bis 91,5 Gew.-%
2. Metalloxide 0,5 bis 3 Gew.-%
3. Glühverlust (DIN 55 921/2 - gemessen bei 1000 °C): 8 bis 15 Gew.-%
4. Feuchte (DIN 53 198 - gemessen bei 105 °C): 2 bis 10 Gew.-%
5. Oberfläche der Primärteilchen nach BET: 40 bis 250 m²/g
6. DBP-Absorption (ASTM D 2414-79) bezogen auf das eingewogene Gewicht: 170 bis 290 %
7. Lineares Mittel der Anzahlverteilung der Sekundärteilchen: 10 bis 2 000 nm
8. Lineares Mittel der Volumenverteilung der Sekundärteilchen: 3 bis 30 μm
9. Anteil an Sekundärteilchen mit einem Durchmesser von < 1 μm: 0,01 bis 5 Gew.-%

-wobei die Zahlen der Parameter 1 bis 3 zusammengerechnet 100 Gew.-% ergeben müssen.

Die Kieselsäure verliert beim Tempern bei 1 000 °C physikalisch und chemisch gebundenes Wasser. Ersteres entspricht der Feuchte gemäß 4. Bevorzugte Kieselsäuren weisen nachstehende Parameter auf, wobei es nicht zwingend ist, daß alle nachstehend genannten Parameter in einem Produkt vereinigt sind:

A. $SiO_2$-Gehalt: 85 bis 90 Gew.-%
B. Glühverlust: 10 bis 12 Gew.-%
C. Feuchte: 4 bis 7 Gew.-%
D. Oberfläche der Primärteilchen: 130 bis 200 m²/g
E. DBP-Absorption: 200 bis 280 %
F. Lineares Mittel der Anzahlverteilung der Sekundärteilchen: 200 bis 600 nm
G. Lineares Mittel der Volumenverteilung der Sekundärteilchen: 5 bis 20 μm.
H. Anteil an Sekundärteilchen mit einem Durchmesser von < 1 μm: 0,5 bis 1,5 Gew.-%.

Neben den genannten genormten Bestimmungsmethoden wurden die

Kieselsäure nach Biltz/Biltz, Ausführung quantitativer Analysen, S. 382, 8. Aufl., (1960) - S. Hirzel-Ver lag, Stuttgart

Metalloxide nach Biltz/Biltz, Ausführung quantitativer Analysen, S. 396, 8. Aufl., (1960) - S. Hirzel-Ver lag, Stuttgart

Oberfläche nach J. Amer. Chem. Soc. 60, 309 (1938) bestimmt.

Die Anzahlverteilung wurde durch Ausmessen von ca. 1 000 Teilchen anhand von photografischer Aufnahmen ermittelt. Die Fotografien wurden mit Hilfe eines Transelektronenmikroskopes erhalten (s. a. W. A. Ladd - The electron microscope and its application to rubber testing and research, S. 334 ff. - Vanderbilt Rubber Handbook, New York (1958)).

Die Volumenverteilung wurde mit der Microtrac-Methode bestimmt (Powder Technology 14, 287 - 293 (1976)).

Die Mittelwerte sowie damit im Zusammenhang stehende Größen wurden gemäß DIN 66 141 (Feb. 1974) berechnet.

Die Kieselsäure ist zu 20 bis zu 200 Gew.-Teilen, vorzugsweise zu 30 bis zu 150 Gew.-Teilen, bezogen auf 100 Gew.-Teile Kautschukfeststoff, in dem Kautschuk enthalten.

Die erfindungsgemäß verwendeten Kieselsäuren können mit handelsüblichen Haftverbesserern hydrophobiert werden (z. B. EP-OS 0 126 871). Die erfindungsgemäß verwendeten Kieselsäuren werden üblicherweise erhalten, indem man bei Fällungskieselsäuren, die den oben aufgeführten Spezifikationen A - F entsprechen, eine Teilchengrößenverteilung für die Sekundärteilchen einstellt, wie sie den Spezifikationen G - I entspricht. Diese Einstellung erfolgt üblicherweise durch Dispergierung der Fällungskieselsäure. Geeignete Fällungskieselsäuren, wie ULTRASIL$^R$ VN 2 und ULTRASIL$^R$ VN 3, werden z. B. in der Druckschrift PT-71-0-5-983 He "Fällungskieselsäuren und Silika, Herstellung, Eigenschaften und Anwendung" der Fa. Degussa, Hanau beschrieben. Der Fachmann ist auch in der Lage, sich diese Fällungskieselsäure durch Umsetzung von Wasserglas mit Schwefelsäure selbst herzustellen.

Geeignete Kautschuklatices sind einmal solche auf Basis von Naturkautschuk bzw. abgebautem Naturkautschuk und zum anderen solche aus Homo-und Mischpolymerisaten von konjugierten Dienen, wie sie durch radikalische Polymerisation unter Verwendung eines Emulgators nach bekannten Verfahren des Standes der Technik hergestellt werden können (siehe z. B. Houben-Weyl, Methoden der organischen Chemie, Band XIV/1/1961/, "Herstellung von Kautschuken", Seite 712 ff.; Ullmanns Enzyklopädie der technischen Chemie, 9. Band /1957/, Seiten 325 bis 339 sowie DE-PS 679 587, 873 747 und1 130 597). Es können auch Mischungen von Kautschuklatices eingesetzt werden. Abgebaute Naturkautschuklatices können z. B. nach dem Verfahren der GB-PS 749 955 erhalten werden. Bevorzugt werden jedoch abgebaute Naturkautschuklatices eingesetzt, wie man sie mit dem Verfahren der DE-OS 36 06 754 gewinnt. Dieses Verfahren ist dadurch gekennzeichnet, daß man den Naturkautschuk in Latexform mit Inertgas, verdünntem Sauerstoff und/oder einer die Peroxidguppe enthaltenden Verbindung bei Temperaturen von 60 bis 100 °C behandelt.

Als konjugierte Diene kommen dabei Butadien-(1,3), Isopren, Piperylen, 2-Chlorbutadien-(1,3), 2,3-Dichlorbutadien-(1,3) und 2,3-Dimethylbutadien-(1,3) infrage. Die Mischpolymerisate können sowohl aus Mischungen dieser konjugierten Diene als auch aus Mischungen dieser konjugierten Diene mit Vinylverbindungen, wie z. B. Styrol, Alpha-Methylstyrol, Acrylnitril, Acrylsäure, Methacrylsäure und Vinylpyridin hergestellt werden. Bevorzugt wird beim erfindungsgemäßen Verfahren ein Styrol-Butadienlatex mit einem Styrolanteil von 15 bis 30 Gew.-% eingesetzt.

Der Feststoffgehalt der Latices beträgt im allgemeinen 20 bis 25 Gew.-%.

Als Fällungshilfsmittel werden ionische und nichtionische Tenside, ionische und nichtionische Polymere sowie Schutzkolloide eingesetzt.

Als ionische Tenside kommen kationische Tenside, wie z. B. Cetyltrimethylammoniumbromid, als nichtionische Tenside kommen Fettalkoholpolyglykolether, wie z. B. Cetyl-$(CH_2$-$CH_2O)_{20}$-H, infrage.

Als ionische Polymere werden insbesondere kationische Polymere, wie z.B. (substituierte) Polyamine, und als nichtionische Polymere werden bevorzugt Polyethylenpolyglykolether eingesetzt.

Ferner können Schutzkolloide, wie z. B. Hydroxyethylcellulose verwendet werden.

Die Fällungshilfsmittel werden ausführlich beschrieben in Iler, The chemistry of silica - John Wiley and Sons (1979)).

Die Fällungshilfsmittel werden in Mengen von 0,1 bis 15 Gew.-%, vorzugsweise von 0,5 bis 2 Gew.-%, bezogen auf 100 Gew.-Teile Kautschukfeststoff, eingesetzt.

Die Fällungshilfsmittel als solche sind nicht neu und können käuflich erworben werden.

Zur Durchführung des erfindungsgemäßen Verfahrens wird vorzugsweise eine Kieselsäuresuspension hergestellt. Wird eine handelsübliche Kieselsäure eingesetzt, so ist zu beachten, daß sie allen im Patentanspruch genannten Parametern entspricht. Üblicherweise erhält man die Suspension dadurch, daß die Kieselsäure in Wasser aufgeschlämmt und anschließend mit einem handelsüblichen Dispergier-oder Emulgiergerät dispergiert wird.

Wird eine Suspension eingesetzt, kann diese etwa 2 bis 12 Gew.-%, vorzugsweise 9 bis 11 Gew.-%, Kieselsäure enthalten. Die Kieselsäure kann auch trocken, ggf. mit Wasser versetzt, dem Latex zugefügt werden.

Es ist auch möglich, die Kieselsäure mit Hilfe eines der bekannten Verfahren (z. B. DE-PS 10 49 834) aus Wasserglas herzustellen.

Die Kieselsäuresuspension wird mit dem üblicherweise die Fällungshilfsmittel enthaltenden Kautschuklatex vereinigt, wobei die Fällung des füllstoffhaltigen Kautschuks nach Zugabe von Säure erfolgt. Geschieht die Vereinigung diskontinuierlich, z. B. in einem Rührkessel, so kann die Kautschukkomponente unter Rühren zu der Füllstoffsuspension zugegeben werden. Bei einer kontinuierlichen Vereinigung, z. B. mit einer Zweistoffdüse, einem dynamischen Durchlaufmischer oder einem statistischen Mischer, werden die beiden Ströme von Fällungshilfsmittel enthaltendem Kautschuk und einer Füllstoffsuspension dem Mischaggregat gleichzeitig zugeführt. Während des Fällprozesses ist eine Temperatur von 15 bis 90 °C, vorzugsweise von 20 bis 30 °C, zweckmäßig. Anschließend wird der füllstoffhaltige Kautschuk von der wäßrigen Phase getrennt und unter ständiger Bewegung getrocknet.

Nicht wesentlich ist es, ob der Latex einer Kieselsäuresuspension zugegeben wird oder umgekehrt. Auch der Zugabezeitpunkt der Fällungshilfsmittel ist nicht von maßgeblicher Bedeutung. Wesentlich für das erfindungsgemäße Verfahren ist die erfindungsgemäße Konstitution der Kieselsäure sowie die Fällung des Kautschuklatex in Gegenwart der Kieselsäure.

Zur Durchführung des Verfahrens kann der pH-Wert der Füllstoffsuspension über weite Bereiche variieren. Wesentlich bei der Einstellung des pH-Wertes ist es, daß die endgültige Mischung aus Kautschuklatex und Füllstoffsuspension einen pH-Wert im Bereich von 1 bis 10, vorzugsweise im Bereich von 3 bis 8 aufweist. Sollte nach dem Vermischen festgestellt werden, daß der pH-Wert nicht zu der gewünschten vollständigen Fällung geführt hat, so kann dieser Wert auch in der Mischung selbst noch nachreguliert werden.

Zur Einstellung des pH-Wertes werden die üblichen Mineralsäuren, wie z. B. Schwefelsäure, Phosphorsäure oder Salzsäure verwendet. Bevorzugte Säure ist Schwefelsäure.

Bei nichtionischen Tensiden bzw. Polymeren hat sich für die Endmischung ein pH-Wert im Bereich von 1 bis 5, vorzugsweise von 3 bis 4, als vorteilhaft erwiesen. Für den Fall ionischer Tenside bzw. Polymere ist unter denselben Bedingungen ein pH-Wert im Bereich von 6 bis 9, vorzugsweise von 7 bis 8, von Vorteil.

Neben der erfindungsgemäß zu verwendenden Kieselsäure können noch andere Füllstoffe eingesetzt werden. Als solche kommen vorzugsweise die in der Kautschuk-Industrie gebräuchlichen Ruße sämtlicher Aktivitätsstufen infrage, wie z. B. SAF-, ISAF-, HAF-Ruße einschließlich deren Abwandlungen FEF-, GPF-, APF-, SRF-und MT-Ruße. Es können jedoch auch Farbruße oder Leitfähigkeitsruße mit Oberflächen von bis zu 1 000 m²/g (BET) verwendet werden.

Die einzusetzende Menge an Ruß kann 20 bis zu 200 Gew.-Teile pro 100 Gew.-Teile Kautschuk, vorzugsweise 50 bis 150 Gew.-Teile auf 100 Gew.-Teile Kautschuk, betragen.

Daneben können noch andere bekannte mineralische Stoffe wie Kaolin, Schiefermehl etc. verwendet werden.

Kombinationen von Kieselsäure und Rußen sind innerhalb der für die einzelnen Komponenten angegebenen Grenzen möglich.

Sollen Weichmacheröle eingearbeitet werden, verwendet man die dafür gebräuchlichen Raffinerie-Produkte, die je nach dem Verwendungszweck der Vulkanisate bevorzugt aus aromatischen, naphthenischen bzw. paraffinischen Kohlenwasserstoffen bestehen. Die einzusetzende Menge an Weichmacherölen liegt zwischen 1 und 100 Gew.-Teilen, bezogen auf 100 Gew.-Teile Kautschuk. Zur Herstellung eines Weichmacheröl enthaltenden, füllstoffhaltigen Kautschuks kann man beispielsweise so vorgehen, daß das Weichmacheröl in geeigneten Mischaggregaten (z. B. Fluidmischern) mit dem nach dem erfindungsgemäßen Verfahren hergestellten, füllstoffhaltigen Kautschuk vereinigt wird.

Die erfindungsgemäß erhaltenen Pulverkautschuk-Typen weisen einen Teilchendurchmesser von 50 bis 500 μm, vorzugsweise von 200 bis 300 μm, auf.

Ein unerwarteter Vorteil des erfindungsgemäßen Verfahrens gegenüber denen des Standes der Technik ist es, daß die Eigenschaften des kieselsäuregefüllten Kautschukpulvers gezielt eingestellt werden können. Durch Variation des linearen Mittelwerts der Anzahlverteilung der Kieselsäure lassen sich Eigenschaften, wie z. B. Korngröße oder Aufrechterhaltung der Rieselfähigkeit nach Lagerung unter Druck und Temperatur, des Kautschukpulvers den Erfordernissen der Praxis anpassen. Mit abnehmendem linearem Mittelwert der Anzahlverteilung nimmt die Korngröße des Kautschukpulvers ab, gleichzeitig steigt die Rieselfähigkeit bzw. die Lagerfähigkeit des Pulvers.

Bei einem Anteil von 1 Gew.-Teil Kieselsäure auf 2 Gew.-Teilen Kautschuk kann z. B. der Teilchendurchmesser auf 200 bis 300 μm eingestellt werden, so daß sich noch keine Probleme mit staubförmigen Anteilen ergeben, zum andern aber Zuschlagstoffe sich noch leicht einarbeiten lassen. Um das gewünschte Maß des Teilchendurchmessers zu erreichen, wird der lineare Mittelwert der Anzahlverteilung auf einen Bereich von 150 bis 250 nm eingestellt.

Andererseits kann bei vorgegebenem linearen Mittelwert der Anzahlverteilung der Kieselsäure die Korngröße des Kautschukpulvers und die Rieselfähigkeit (Lagerfähigkeit) über die Kautschuk/Kieselsäure-Zusammensetzung gesteuert werden. Mit zunehmendem Kieselsäuregehalt im Pulverkautschuk nimmt der Durchmesser des Pulverkorns und die Rieselfähigkeit zu.

Ein weiterer Vorteil des erfindungsgemäßen Verfahrens ist die Tatsache, daß bei der Fällung kein enger pH-Wertbereich einzuhalten ist. Ferner ist es möglich, die Ausfällung ohne Elektrolytzugabe durchzuführen. Hierdurch ergibt sich eine ökologisch problemlose Arbeitsweise.

Ein anderer bedeutender Vorteil des Verfahrens ist die Möglichkeit, Pulverkautschuk-Typen mit sehr geringem Füllstoffanteil (ca. 35 Gew.-Teile auf 100 Gew.-Teile Kautschukfeststoff) unter Aufrechterhaltung guter Allgemeineigenschaften herzustellen. -

Die Messung der pH-Werte erfolgte mit Geräten der Firma Schott (Typ CG 822) bzw. der Firma Metrohm (Typ E 520).

Die Schertestmessungen und die Bestimmung der Druckfestigkeit erfolgten bei 20 °C (nach Jenike und Johannson im Flow Factor Tester - Verfahrenstechnik 2, 10, 68 (1976)).

Soweit nicht anders angegeben, beziehen sich alle Angaben auf das Gewicht.


## Beispiele

### Beispiel 1 (Tabelle II)

Es wird ein handelsüblicher Kautschuklatex (Latex Typ 1502 der Bunawerke Hüls GmbH; Styrolgehalt: 23,5 Gew.-%, Rest: Butadien; Feststoffgehalt: ca. 22 Gew.-%) und eine 20 gewichtsprozentige wäßrige Lösung des Fällungshilfmittels (Cetyl-$(CH_2-CH_2-O)_{20}$-H) eingesetzt. Die in Tabelle I aufgeführten Kieselsäuren werden als 11 gewichts prozentige Suspension verwendet.

Der Latex und das Fällungshilfsmittel (1 Gew.-Teil auf 100 Gew.-Teile Kautschukfeststoff) werden bei Raumtemperatur in einem 30 l-Rührbehälter gemischt. Danach wird die Kieselsäuresuspension zugegeben und mit den bereits vorgelegten Komponenten 10 Minuten intensiv vermischt (Rührer: Firma Janke und Kunkel, Typ: 115/2 - Nr. 123; 2 KW; 2820 Upm - Umfangsgeschwindigkeit: 15 ms$^{-1}$). Anschließend wird Schwefelsäure in einem Guß zugefügt. Die Menge an Säure ist so bemessen, daß die Fällflotte einen pH-Wert von 3 aufweist.

Der sich bildende Niederschlag wird salzfrei gewaschen, abfiltriert und unter ständiger Bewegung getrocknet.


### Beispiel 2 (Tabelle III)

Es wird ein handelsüblicher Naturlatex (CV-constant viscosity; Feststoffgehalt: ca. 60 Gew.-%; abgebaut gemäß DE-OS 36 06 754 (Versuchs-Nr. 1) und ein handelsüblicher Nitrilkautschuklatex (PERBUNAN[R]-Typ N 3305; Acrylnitril gehalt: 33 Gew.-%; Feststoffgehalt: ca. 25 Gew.-%) (Versuchs-Nr. 2) eingesetzt. Für die Versuche wird eine Kieselsäure vom Typ 3 (Tabelle I) (50 Gew.-Teile auf 100 Gew.-Teile Kautschukfeststoff) verwendet. Als Fällungshilfsmittel wird in Versuch 1 eine 1 gewichtsprozentige wäßrige Lösunge eines handelsüblichen hochmolekularen Amins (ROHAGIT[R])
bzw. in Versuch 2 eine 20 gewichtsprozentige wäßrige Lösung des Fällungshilfsmittels aus Beispiel 1 eingesetzt.

Fällung und Aufarbeitung erfolgen entsprechend Beispiel 1.


### Beispiel 3 (Tabelle IV)

Es werden in Versuch 1 ein handelsüblicher Kautschuklatex gemäß Beispiel 1 und in Versuch 2 und 3 ein handelsüblicher Nitrilkautschuklatex gemäß Beispiel 2 eingesetzt. Es wird das Fällungshilfsmittel entsprechend Beispiel 1 verwendet (1 Gew.-Teil auf 100 Gew.-Teile Kautschukfeststoff). Als Kieselsäure wird eine solche vom Typ 3 (Tabelle I) eingesetzt.

Es wird ein Gemisch aus einer 11 gewichtsprozentigen wäßrigen Kieselsäure-und einer 5 gewichsprozentigen wäßrigen Rußsuspension verwendet. Die Rußsuspension (Ruß-Typ: CORAX[R] N 339) wurde hergestellt, indem der Ruß in Wasser mittels eines handelsüblichen Dispergiergerätes (Ultra-Turrax; 0,4 KW; 10 000 Upm; Spaltbreite: 2 mm) behandelt wurde.

Fällung und Aufarbeitung erfolgen gemäß Beispiel 1.

Tabelle I

| Nr. | BET-Oberfläche $[m^2/g]$ | linearer Mittelwert der Anzahlverteilung $[nm]$ | linearer Mittelwert der Volumenverteilung $[nm]$ |
|---|---|---|---|
| 1 | 80 | 510 | 11 |
| 2 | 130 | 350 | 13 |
| 3 | 130 | 300 | 13 |
| 4 | 210 | 205 | 18 |

In den folgenden Eigenschaften stimmen die Kieselsäuren überein:
$SiO_2$ 87 Gew.-%, $Na_2O$ 0,8 Gew.-%, Glühverlust bei 1 000 °C 11 Gew.-%,
Feuchte bei 105 °C 6 Gew.-%, Sekundärteilchen mit einem Durchmessser
von < 1 μm: 1,1 Gew.-%.

## Tabelle II

| Vers. Nr. | Kieselsäure (Tabelle I) | Kieselsäure-Gehalt *) (0 Stunden; 20 °C) | Jenike-Test $[N/m^2]$ (0 Stunden; 20 °C) | mittlerer Pulverkorndurchmesser ***) $[µm]$ |
|---|---|---|---|---|
| 1 | 1 | 50 | 990 | 410 |
| 2 | 2 | 50 | 650 | 290 |
| 3 | 3 | 50 | 340 | 210 |
| 4 | 4 | 50 | 0 | 90 |
| 5 | 3 | 40 | 780 | 390 |
| 6 | 3 | 30 | 1 600 | 500 |
| 7 | 3 | 35 + 5 **) | 240 | 180 |
| 8 | 3 | 25 + 5 **) | 890 | 390 |

*) Gew.-Teile auf 100 Gew.-Teile Kautschukfeststoff

**) Zugabe in zwei Schritten, davon der zweite Teil nach Ausfällung des Kautschuks

***) Bestimmung des Durchmessers des Pulverkorns gemäß DIN 4188, Teil 1 und 2

## Tabelle III

| Vers. Nr. | Fällungshilfsmittel-gehalt *) | pH-Wert**) | Jenike-Test $[N/m^2]$ (0 Stunden; 20 °C) | mittlere Pulver-korngröße $[\mu m]$ ***) |
|---|---|---|---|---|
| 1 | 3 | 7,0 | 1050 | 380 |
| 2 | 1 | 3,0 | 240 | 260 |

*) Gew.-Teile auf 100 Gew.-Teile Kautschukfeststoff

**) in der Fällflotte

***) Bestimmung des Durchmessers des Pulverkorns gemäß DIN 4188, Teil 1 und 2

## Tabelle IV

| Vers. Nr. | Kieselsäure-gehalt *) | Ruß-Gehalt *) | Jenike-Test $[N/m^2]$ (0 Stunden; 20 °C) | mittlere Pulver-korngröße **) $[\mu m]$ |
|---|---|---|---|---|
| 1 | 50 | 5 | 30 | 220 |
| 2 | 40 | 20 | 10 | 390 |
| 3 | 45 | 5 | 20 | 310 |

*) Gew.-Teile auf 100 Gew.-Teile Kautschuk

**) Bestimmung des Durchmessers des Pulverkorns gemäß DIN 4188, Teil 1 und 2

## Ansprüche

1. Verfahren zur Herstellung eines rieselfähigen, kieselsäuregefüllten Pulverkautschuks durch Ausfällen eines Kautschuklatex in Gegenwart von Kieselsäure und einem Fällungshilfsmittel mit Hilfe von Säuren, dadurch gekennzeichnet,
daß eine Kieselsäure eingesetzt wird, die nachstehende Eigenschaften aufweist:

1. SiO₂-Gehalt: 82 bis 91,5 Gew.-%
2. Metalloxide 0,5 bis 3 Gew.-%
3. Glühverlust (DIN 55 921/2 - gemessen bei 1 000 °C): 8 bis 15 Gew.-%
4. Feuchte (DIN 53 198 - gemessen bei 105 °C): 2 bis 10 Gew.-%
5. Oberfläche der Primärteilchen nach BET: 40 bis 250 m²/g
6. DBP-Absorption (ASTM D 2414-79) bezogen auf das eingewogene Gewicht: 170 bis 290 %
7. Lineares Mittel der Anzahlverteilung der Sekundärteilchen: 10 bis 2 000 nm
8. Lineares Mittel der Volumenverteilung der Sekundärteilchen: 3 bis 30 μm
9. Anteil an Sekundärteilchen mit einem Durchmesser von < 1 μm; 0,01 bis 5 Gew.-%
-wobei die Zahlen der Parameter 1 bis 3 zusammengerechnet 100 Gew.-% ergeben müssen.

2. Verfahren zur Herstellung eines Pulverkautschuks gemäß Anspruch 1,
dadurch gekennzeichnet,
daß eine Kieselsäure eingesetzt wird, deren DBP-Absorption (ASTM D 2414-79), bezogen auf das eingewogene Gewicht, 200 bis 280 % beträgt.

3. Verfahren zur Herstellung eines Pulverkautschuks gemäß den Ansprüchen 1 und 2,
dadurch gekennzeichnet,
daß das lineare Mittel der Anzahlverteilung der Sekundärteilchen 200 bis 600 nm beträgt.

4. Verfahren zur Herstellung eines Pulverkautschuks gemäß den Ansprüchen 1 bis 3,
dadurch gekennzeichnet,
daß das lineare Mittel der Volumenverteilung der Sekundärteilchen 5 bis 20 μm beträgt.

5. Rieselfähiger, kieselsäuregefüllter Pulverkautschuk mit einem Teilchendurchmesser im Bereich von 50 bis 500 μm hergestellt gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEM.-ING.-TECH., Band 48, Nr. 11, November 1976, Seiten 922-933, Verlag Chemie, GmbH, Weinheim, DE; H. FERCH: "Pulverförmige amorphe synthetische Kieselsäure-Produkte Herstellung und Charakterisierung" * Seite 924, Tabelle 2, Spalte B1 * | | C 08 K   3/36 C 08 L  21/00 C 08 J   3/20 C 09 C   1/30 |
| | --- | | |
| A | DE-A-2 822 148  (HÜLS) * Anspruch  1;  Seite  6,  Zeilen 26-28;  Beispiel  8;  Seite  11, Zeilen 34-36 * | | |
| | ----- | | |

| RECHERCHIERTE SACHGEBIETE (Int. Cl.4) |
|---|
| C 08 K C 08 L C 08 J C 09 C |

Der vorliegende Recherchenbericht wurde für alle Patentansprüche erstellt.

| Recherchenort | Abschlußdatum der Recherche | Prüfer |
|---|---|---|
| DEN HAAG | 02-07-1987 | VAN HUMBEECK F.W.C. |